# EUROPEAN PATENT APPLICATION

(11) **EP 4 644 156 A1**
(43) Date of publication of application: **05.11.2025**
(21) Application number: 23912103.1
(22) Date of filing: 26.12.2023
(51) Int. Cl.: B60K 15/03, B60K 8/00

(54) **WORK VEHICLE**

(30) Priority: 28.12.2022 JP 2022212145
(71) Applicant: KUBOTA CORPORATION, Osaka-shi, Osaka 556-8601 (JP)
(72) Inventor: SAKANO, Tomoyoshi, Sakai-shi, Osaka 590-0908 (JP); IWAMI, Kenichi, Sakai-shi, Osaka 590-0908 (JP); TAKAKI, Go, Sakai-shi, Osaka 590-0908 (JP); MINAMIDE, Yuki, Sakai-shi, Osaka 590-0908 (JP); AMITANI, Kodai, Sakai-shi, Osaka 590-0908 (JP); TAKAKI, Takahiro, Sakai-shi, Osaka 590-0908 (JP); OHNISHI, Teppei, Sakai-shi, Osaka 590-0908 (JP); HAYASHI, Yosuke, Sakai-shi, Osaka 590-0908 (JP); KAZAMA, Isamu, Sakai-shi, Osaka 590-0908 (JP); MORITA, Atsushi, Sakai-shi, Osaka 590-0908 (JP); MATSUI, Kenshiro, Sakai-shi, Osaka 590-0908 (JP)
(74) Representative: Cabinet Beau de Loménie
(86) International application number: PCT/JP2023/046555
(87) International publication number: WO 2024/143324

(57) **Abstract**

To store a heavy unit such as a tank (7) without losing weight balance.

A working vehicle (1) according to the present invention includes a vehicle body (2) to which a working device (49) is connectable, a cabin (3) to house an operator's seat (10) provided on the vehicle body (2), a traveling device (4) to support the vehicle body (2) and allow the vehicle body (2) to travel, a drive device (5) to drive the traveling device (4), and a tank (7) to store gas to drive the drive device (5), and the tank (7) is provided below the cabin (3).

## Description

### Technical Field

The present invention relates to working vehicles each of which is driven using gas stored in a tank.

### Background Art

As described in Patent Literature 1, a tractor includes a hood in a front portion of a vehicle body. Inside the hood, an engine, a radiator, a fuel tank, a battery, and the like are stored.

On the other hand, for the purpose of realizing decarbonization, fuel cell vehicles (FCVs) that use hydrogen as fuel have been developed. These working vehicles include a tank (hydrogen tank) in which hydrogen gas is stored (reserved).

### Citation List

### Patent Literature

PTL 1: Japanese Unexamined Patent Application Publication No. 2022-128483

### Summary of Invention

### Technical Problem

Even working vehicles that are not fuel cell vehicles may include a tank in which fuel is stored (reserved). For example, a working vehicle that uses gas such as methane includes a tank in which the fuel gas is stored (reserved).

The tank is a member that has a relatively large volume and is heavy in weight among members that define a drive device. It is desirable to give consideration to a weight balance of a working vehicle depending on a position where a heavy unit such as a tank is provided.

The present invention was accomplished in view of the above problem, and an object of the present invention is to provide working vehicles in each of which a heavy unit such as a tank can be stored without losing weight balance.

### Solution to Problem

Technical solutions provided by the present invention to solve the above problem include the following features.

A working vehicle according to an aspect of the present invention includes a vehicle body to which a working device is connectable; a cabin to house an operator's seat provided on the vehicle body; a traveling device to support the vehicle body and allow the vehicle body to travel; a drive device to drive the traveling device; and a tank to store gas to drive the drive device, and the tank is provided below the cabin.

The drive device may include a fuel cell to generate electric power using the gas in the tank, a battery to store electric power generated by the fuel cell, and a drive motor to be driven by electric power generated by the fuel cell.

The battery may be provided below the cabin together with the tank.

The fuel cell may be provided below the cabin together with the tank.

A plurality of the tanks may be arranged along a front-rear direction of the vehicle body, and the plurality of tanks may be each in the form of a tube extending in a width direction of the vehicle body.

A plurality of the tanks may be arranged along a width direction of the vehicle body, and the plurality of tanks may each be in the form of a tube extending in a front-rear direction of the vehicle body.

The drive device may include a valve unit to adjust a flow rate of the gas supplied from the plurality of tanks to the fuel cell, and the valve unit may be provided at a position beside the plurality of tanks and lower than the cabin.

The working vehicle 1 may further include a transmission case to transmit a driving force generated by the drive motor to the traveling device, and the tank may be provided between the cabin and the transmission case.

The working vehicle 1 may further include a transmission case to transmit a driving force generated by the drive motor to the traveling device, and the battery may be provided between the cabin and the transmission case.

The working vehicle 1 may further include a transmission case to transmit a driving force generated by the drive motor to the traveling device, and the fuel cell may be provided between the cabin and the transmission case.

### Advantageous Effects of Invention

With the working vehicle according to the present invention, a heavy unit such as a tank can be stored without losing weight balance.

### Brief Description of Drawings

[FIG. 1] FIG. 1 is a perspective view of a working vehicle according to the present invention.
[FIG. 2] FIG. 2 is a front view of the working vehicle according to the present invention.
[FIG. 3] FIG. 3 is a left side view of the working vehicle according to the present invention.
[FIG. 4] FIG. 4 is a plan view of the working vehicle according to the present invention.
[FIG. 5] FIG. 5 is a block diagram of a drive device provided in the working vehicle according to the present invention.
[FIG. 6] FIG. 6 illustrates a tank unit in which tanks are arranged in a width direction.
[FIG. 7] FIG. 7 is an exploded view of the tank unit of FIG. 6.
[FIG. 8] FIG. 8 is an exploded view of a tank unit in which tanks are arranged in a front-rear direction.
[FIG. 9A] FIG. 9A illustrates a tank unit including a plurality of tanks in a vehicle body width direction and fixed to a transmission case.
[FIG. 9B] FIG. 9B illustrates a tank unit including tanks and a fuel-cell stack and fixed to a transmission case.
[FIG. 9C] FIG. 9C illustrates a tank unit including tanks, a fuel-cell stack, and a battery and fixed to a transmission case.

### Description of Embodiments

A preferable embodiment of a working vehicle 1 according to the present invention is described below.

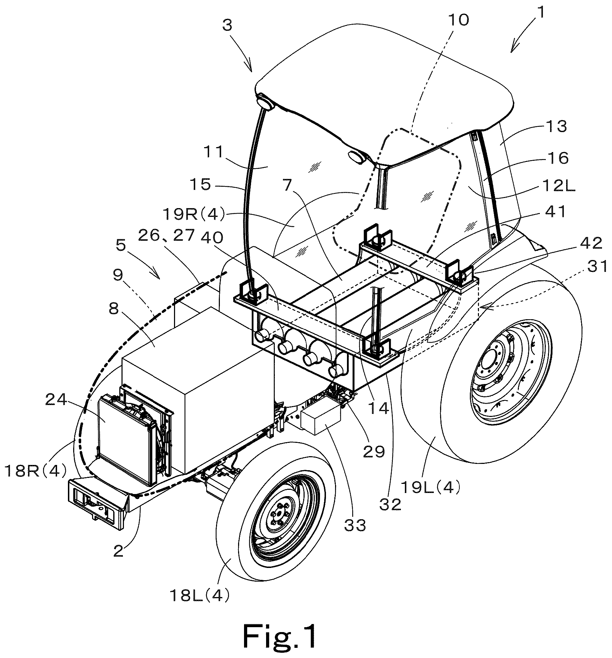

FIG. 1 is a perspective view of a tractor that is an example of the working vehicle 1 according to the present embodiment. The working vehicle 1 according to the present embodiment is a vehicle in which a tank 7 in which gas drive a drive device 5 is stored is provided inside a hood 9. Examples of such a vehicle including the tank 7 include a fuel cell vehicle (FCV) in which hydrogen gas that is fuel of electrode reaction is reserved in the tank 7. The working vehicle 1 according to the present embodiment is also such a fuel cell vehicle.

Since gas (e.g., methane) other than hydrogen is sometimes used as fuel for a fuel cell vehicle, the working vehicle 1 according to the present invention also encompasses a fuel cell vehicle in which methane or the like is stored in the tank 7. Furthermore, the working vehicle 1 according to the present invention also encompasses a vehicle in which an internal-combustion engine (e.g., a diesel engine) is driven by using, as fuel, gas such as hydrogen, methane, or natural gas, petroleum gas, or biomass gas mainly containing methane stored in the tank 7.

**In** the present embodiment, a tractor is taken as an example of the working vehicle 1. However, the working vehicle 1 according to the present invention is not limited to a tractor and may be, for example, an agricultural machine (e.g., a combine, a rice planter) other than a tractor, a construction machine, a utility vehicle, or the like.

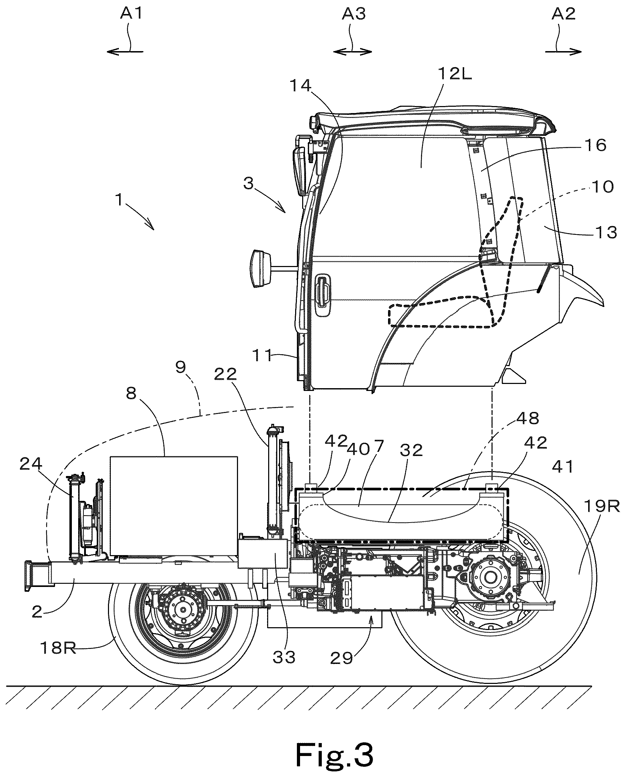

**In** the following description, a direction indicated by arrow A1 in FIG. 3 (a direction in which the working vehicle 1 travels forward) is referred to as a forward direction, a direction indicated by arrow A2 (a direction in which the working vehicle 1 travels rearward) is referred to as a rearward direction, and a direction indicated by arrow A3 is referred to as a front-rear direction. The directions indicated by A1 to A3 are also illustrated as appropriate in drawings other than FIG. 3.

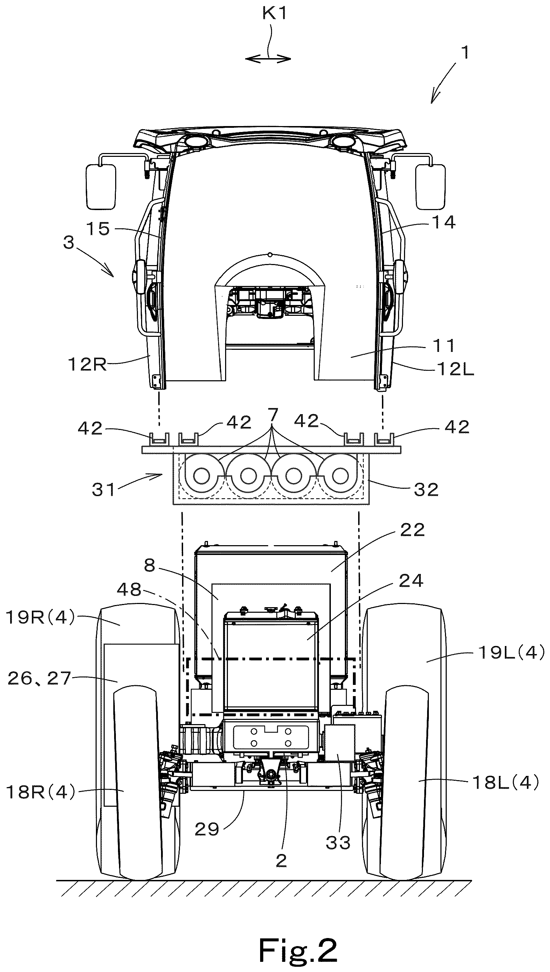

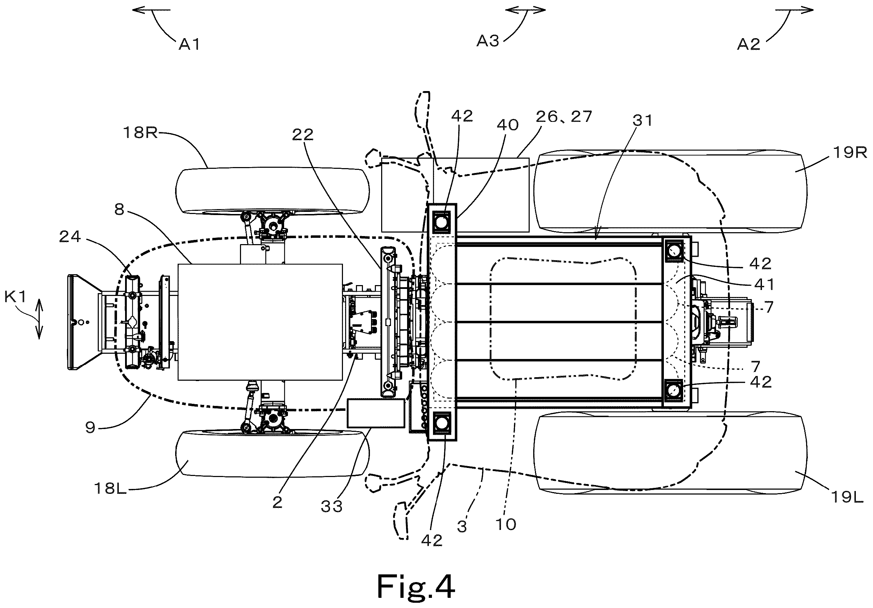

A horizontal direction (left-right direction) orthogonal to the front-rear direction A3 is referred to as a vehicle body width direction K1 or a width direction (see FIGS. 2 and 4). The vehicle body width direction K1 is a width direction of the working vehicle 1. A direction pointing rightward or leftward from a central portion in the width direction of the working vehicle 1 is referred to as a direction outward in the vehicle body width direction K1 (outward in the width direction). That is, the direction outward in the width direction is a direction pointing away in the vehicle body width direction K1 from a center in the width direction of the working vehicle 1. A direction opposite to the direction outward in the width direction is referred to as a direction inward in the vehicle body width direction K1 (inward in the width direction). That is, the direction inward in the width direction is a direction pointing toward the center in the width direction of the working vehicle 1 in the vehicle body width direction K1.

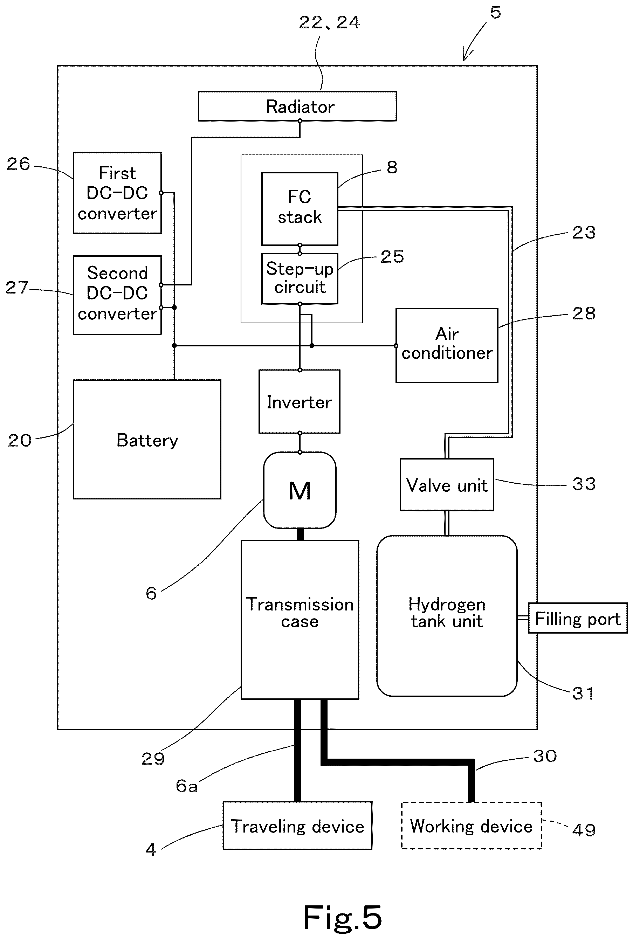

As illustrated in FIGS. 1 to 4, the working vehicle 1 includes a vehicle body 2, a cabin 3 in which an operator's seat 10 provided on the vehicle body 2 is housed, a traveling device 4 that supports the vehicle body 2 and allows the vehicle body 2 to travel, and a drive device 5 that drives the traveling device 4. FIG. 5 is a block diagram of the drive device 5 provided in the working vehicle 1 according to the present embodiment. Note that the drive device 5 provided in the working vehicle 1 according to the present invention is not limited to the example illustrated in FIG. 2. As for units such as a drive motor 6 included in the drive device 5, the number of installed pieces can be changed as appropriate.

A fuel cell (fuel-cell stack 8) used in the drive device 5 according to the present embodiment generates electricity by causing hydrogen, which is fuel, to produce electrode reaction with oxygen. The hydrogen supplied as fuel to the fuel cell is occluded or stored in the tank 7. The drive device 5 includes the fuel-cell stack 8 in which electrode layers are stacked. The hydrogen gas in the tank 7 is supplied to the fuel-cell stack 8, and the electrode reaction is performed in the fuel-cell stack 8. The drive device 5 according to the present invention has a structure in which the drive motor 6 is driven by using electricity taken out by the electrode reaction in the fuel-cell stack 8. In the electrode reaction in the fuel-cell stack 8, carbon dioxide, which is always discharged, for example, in combustion reaction of an internal-combustion engine, is not discharged. Therefore, the working vehicle 1 according to the present invention, which is driven by using electric power generated by a fuel cell, is promising for realization of decarbonization.

Hereinafter, first, a configuration of the working vehicle 1 other than the drive device 5 is described.

As illustrated in FIGS. 1 to 4, the traveling device 4 is provided at both ends of the vehicle body 2 in the vehicle body width direction. The drive device 5 is provided on an upper portion of the vehicle body 2. The cabin 3 is mounted above a rear portion of the vehicle body 2, and the hood 9 is provided above a front portion of the vehicle body 2. That is, the vehicle body 2 according to the present embodiment is a member that supports members such as the traveling device 4, the drive device 5, and the cabin 3. Specifically, a transmission case 29 that transmits power from the drive device 5 to the traveling device 4 is provided on a rear portion of the vehicle body 2. A front portion of the vehicle body 2 is formed from a combination of metal frame members or the like to exhibit high rigidity.

As illustrated in FIGS. 2 to 4, the cabin 3 is a box mounted above the rear portion of the vehicle body 2, and the operator's seat 10 is provided inside the cabin 3. The cabin 3 includes front, rear, left, and right panels and pillars provided between adjacent panels. Specifically, the cabin 3 includes a front panel 11 provided forward of the operator's seat 10, door panels 12L and 12R provided leftward and rightward of the operator's seat 10, respectively, and a rear panel 13 provided rearward of the operator's seat 10.

The cabin 3 includes a left front pillar 14, a right front pillar 15, a left rear pillar 16, and a right rear pillar. The left front pillar 14 is provided between the front panel 11 and the left door panel 12L. The right front pillar 15 is provided between the front panel 11 and the right door panel 12R. The left rear pillar 16 is provided between the rear panel 13 and the left door panel 12L. The right rear pillar is provided between the rear panel 13 and the right door panel.

The traveling device 4 supports the vehicle body 2 and allows the vehicle body 2 to travel on a road surface (ground). In other words, the traveling device 4 gives propelling force to the vehicle body 2. In the present embodiment, the traveling device 4 is front tires 18L and 18R and rear tires 19L and 19R made of rubber or the like. The rear tires 19L and 19R are rubber tires having a larger diameter than the front tires 18L and 18R and can support a large load applied to the rear portion of the vehicle body 2. In the traveling device 4 according to the present embodiment, power is transmitted from the drive device 5 to either the front tires 18L and 18R or the rear tires 19L and 19R or to both of the front tires 18L and 18R and the rear tires 19L and 19R. Note that a crawler or the like may be used as the traveling device 4 instead of the rubber tires.

Next, the drive device 5 is described. The drive device 5 generates power for driving the traveling device 4. In the present invention, the drive device 5 uses electric power generated by the fuel cell. Specifically, the drive device 5 includes the drive motor 6 to generate power to drive the traveling device 4, the fuel-cell stack 8 that supplies electric power to the drive motor 6, and a battery 20 in which electric power supplied from the fuel-cell stack 8 is stored. Furthermore, the working vehicle 1 includes the tank 7 that supplies hydrogen gas for fuel to the fuel-cell stack 8.

The drive motor 6, the battery 20, and the tank 7 that define the drive device 5 are described below.

As illustrated in FIGS. 1 to 4, the fuel-cell stack 8 includes a plurality of stacked unit cells each including two kinds of electrodes, specifically, a positive electrode and a negative electrode inside a battery casing 21 having a box shape.

Specifically, the positive electrode and the negative electrode are made of a positive-electrode material and a negative-electrode material, respectively, and has a sheet shape or a film shape. Each unit cell includes a single positive electrode and a single negative electrode, and adjacent unit cells are separated by a separator. The hydrogen gas in the tank 7 is supplied to the positive electrode, and oxygen gas (oxidation gas) compressed by a compressor or the like is supplied to the negative electrode, and battery reaction (electric power generation) is performed in each unit cell. The fuel-cell stack 8 generates electric power of a voltage and a current that can drive the drive device 5 by gathering electric power generated by the unit cells.

As illustrated in FIG. 5, a coolant for adjusting an electrode temperature is supplied to the fuel-cell stack 8, and thus a temperature of the electrodes provided in the fuel-cell stack 8 is adjustable to a temperature at which electric power generation efficiency is high (approximately 70°C in a case of a hydrogen fuel cell). The coolant circulates between an inside of the fuel-cell stack 8 and a radiator (first radiator 22) provided on the front portion of the vehicle body 2, and a temperature inside the fuel-cell stack 8 is made adjustable by adjusting a flow rate of the coolant by using a pump, a valve, or the like (not illustrated).

As illustrated in FIGS. 3 to 5, in the present embodiment, the fuel-cell stack 8 is stored inside the hood 9 provided above the front portion of the vehicle body 2. The hydrogen gas is supplied from the tank 7 to the fuel-cell stack 8 through a gas pipe 23. The first radiator 22 for cooling the coolant for adjusting an electrode temperature is provided rearward of the fuel-cell stack 8 inside the hood 9.

Note that in the working vehicle 1 according to the present embodiment, a radiator is also provided forward of the fuel-cell stack 8 inside the hood 9. The radiator provided forward of the fuel-cell stack 8 is a radiator provided separately from the first radiator 22 provided rearward and is called a second radiator 24. In the present embodiment, the second radiator 24 is used not for adjusting an electrode temperature, but for a purpose such as cooling other than cooling of the fuel-cell stack 8 (e.g., for an air conditioner 28 for cooling an inside of the cabin 3).

As illustrated in FIG. 5, a step-up circuit 25 that steps up electric power generated by the fuel-cell stack 8 is provided downstream of the drive motor 6 (downstream on an electric power transmission path). The step-up circuit 25 steps up the electric power generated by the fuel-cell stack 8, and thus a voltage for activating the drive motor 6 can be secured.

The step-up circuit 25 includes a circuit for stepping up the electric power generated by the fuel-cell stack 8, and the electric power thus stepped up is sent to the drive motor 6 and drives the drive motor 6. Note that some electric components used in the working vehicle 1 operate at a voltage lower than the drive motor 6. To such electric components that operate at a low voltage (light electric components), electric power stepped down by a step-down circuit including a first DC-DC converter 26 and a second DC-DC converter 27 is supplied. In the present embodiment, examples of the electric components that operate at a low voltage include the radiators (the first radiator 22 and/or the second radiator 24), the battery 20, and the air conditioner 28.

The battery 20 stores electricity generated by the fuel-cell stack 8. Electric power stepped down by the first DC-DC converter 26 is supplied to the battery 20 and the air conditioner 28, and electric power stepped down by the second DC-DC converter 27 is supplied to the radiators.

In the working vehicle 1 according to the present embodiment, the battery 20 is stored in a case located between the right front tire 18R and the right rear tire 19R (in a rightward portion of the central portion of the vehicle body 2 in the front-rear direction) together with the first DC-DC converter 26 and the second DC-DC converter 27. The air conditioner 28 is provided below the operator's seat 10 in the cabin 3. The positions where the battery 20 and the air conditioner 28 are provided are not limited to those in the example of the present embodiment.

The drive motor 6 is, for example, a permanent magnet embedded type DC or AC synchronous motor, a winding field type synchronous motor, or the like. The drive motor 6 is a single drive motor 6 provided rearward of the fuel-cell stack 8. The drive motor 6 includes an output shaft 6a extending rearward and drives the output shaft 6a to rotate. A rear end of the output shaft 6a is connected to the transmission case 29.

A transmission, a clutch, a differential gear, and the like that change speed stages of power transmitted to the output shaft 6a are provided in the transmission case 29. The transmission case 29 decelerates or accelerates power input from the output shaft 6a and outputs the decelerated or accelerated power to the front tires 18L and 18R and/or the rear tires 19L and 19R of the traveling device 4. For example, power output to the traveling device 4 is transmitted only to the rear tires 19L and 19R in a case where the working vehicle 1 is rear-wheel drive, and the power output to the traveling device 4 is transmitted to both of the front tires 18L and 18R and the rear tires 19L and 19R in a case where the working vehicle 1 is four-wheel drive.

Note that the drive motor 6 according to the present embodiment is provided at only one position on the upper portion of the vehicle body 2, and power generated by the single drive motor 6 is distributed to the front tires 18L and 18R and/or the rear tires 19L and 19R. However, the number of drive motors 6 provided in the drive device 5 according to the present invention may be changed as appropriate.

**In** the working vehicle 1 according to the present embodiment, the transmission case 29 not only transmits the decelerated or accelerated power to the traveling device 4, but also transmits a part of the power to a working device 49. Specifically, a power take-off shaft (PTO shaft) 30 is provided in a rear portion of the working vehicle 1 (on a rear end of the transmission case 29), and power transmitted (input) to the transmission case 29 is output not only to the traveling device 4, but also to the PTO shaft 30. In this way, the working device 49 (implement) can be actuated by using electric power generated by the fuel cell.

Not only the PTO shaft 30, but also a coupler (three-point linkage) is provided in the rear portion of the working vehicle 1 according to the present embodiment (on the rear end of the transmission case 29). Such a three-point linkage allows various implements (working devices 49) to be attached rearward of the working vehicle 1 and change their postures or be driven, thus allowing the working vehicle 1 to perform various kinds of work. The working device 49 is an implement such as a cultivator, a rotary, a mulcher, a hammer knife mower, a ridge coating machine, a conveying machine, a seeding machine, a harrow, or a ridge making machine.

Note that the PTO shaft 30 and the three-point linkage need not necessarily be provided. The PTO shaft 30 and the three-point linkage can be omitted in a case where the working vehicle 1 is an agricultural machine such as a combine or a rice planter, a construction machine, or the like. A hydraulic pump that is driven by power output by the drive motor 6, an electric motor different from the drive motor 6, or the like may be provided separately from the drive motor 6, and the working device 49 (implement) may be actuated by a hydraulic pressure or electric power.

The tank 7 is provided below the cabin 3 as a tank unit 31 including the tank 7. The tank unit 31 is provided between the transmission case 29 and the cabin 3. The tank unit 31 includes a tank casing 32 in which a plurality of tanks 7 can be stored. In the present embodiment, four tanks 7 are stored in the tank casing 32. Brackets 42 that elastically support lower ends of the left front pillar 14, the right front pillar 15, the left rear pillar 16, and the right rear pillar of the cabin 3 are provided on an upper portion of the tank unit 31. In the tank unit 31, the gas pipe 23 that guides the hydrogen gas in the tank 7 is provided for each tank 7. A valve unit 33 that, for example, mixes hydrogen gas introduced through the gas pipes 23, adjusts a flow rate of the hydrogen gas to a predetermined flow rate, and sends the hydrogen gas to the fuel-cell stack 8 is provided at leading ends of the gas pipes 23.

Next, the tanks 7, the tank casing 32, the brackets 42, the gas pipes 23, and the valve unit 33 included in the tank unit 31 are described.

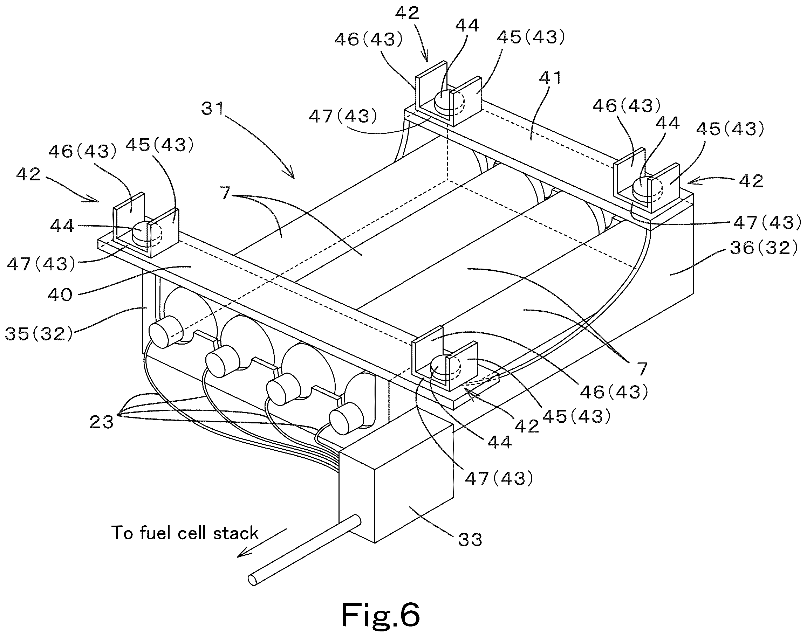

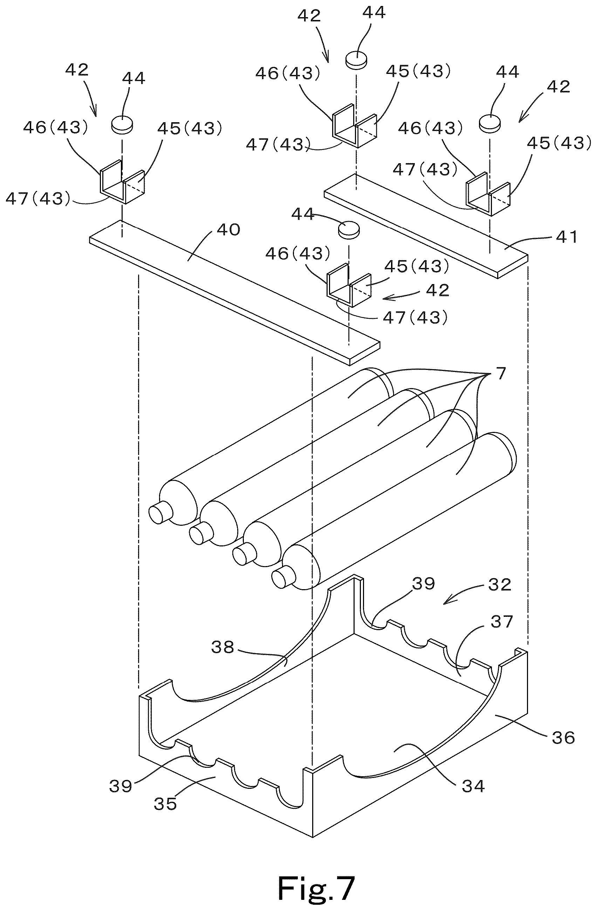

As illustrated in FIGS. 6 and 7, a cylinder having a long cylindrical shape made of a hard synthetic resin strengthened by carbon fibers or glass fibers is used as each of the tanks 7. In the present embodiment, the four tanks 7 (cylinders) are arranged in the width direction in the tank casing 32 so that a central axis of each tank 7 (cylinder) is directed in the front-rear direction.

Each tank 7 includes a neck 7a at a front end thereof. The gas pipe 23 is coupled to the neck 7a of the tank 7 with a safety valve (solenoid valve) (not illustrated) interposed therebetween.

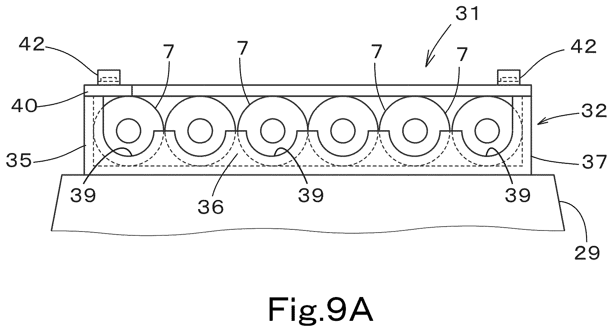

The tank casing 32 can accommodate a plurality of tanks 7 and is fixed to the transmission case 29 with use of a fastening member such as a bolt or by welding. As illustrated in FIGS. 9A to 9C, the tank casing 32 is fixed to an upper portion of the transmission case 29. In the present embodiment, the tank casing 32 is fixed in contact with an upper surface of the transmission case 29. However, the tank casing 32 may be fixed so that a space is formed between the tank casing 32 and the upper surface of the transmission case 29.

The tank casing 32 has a size larger than the tanks 7 and accommodates a plurality of tanks 7. The tank casing 32 according to the present embodiment is formed from a steel material or the like having a thickness that can thermally and physically protect the tanks 7 from an outside and has a box shape open on an upper side.

Specifically, the tank casing 32 according to the present embodiment includes a bottom portion 34 having a rectangular plate shape that is longer in the front-rear direction than in the vehicle body width direction, a front wall portion 35 that stand along an up-down direction on a front edge of the bottom portion 34, a left wall portion 36 that stands along the up-down direction on a left edge of the bottom portion 34, a rear wall portion 37 that stands along the up-down direction on a rear edge of the bottom portion 34, and a right wall portion 38 that stands along the up-down direction on a right edge of the bottom portion 34. The bottom portion 34 of the tank casing 32 is fixed to the upper portion of the transmission case 29 by means such as fastening using a bolt or the like or welding. Note that although a lower portion of the tank casing 32 is fixed to the upper portion of the transmission case 29 (see FIGS. 9A to 9C) in the above embodiment, the lower portion of the tank casing 32 may be directly fixed to a structure (e.g., the vehicle body 2) other than the transmission case 29.

An upper edge of the front wall portion 35 and an upper edge of the rear wall portion 37 of the tank casing 32 have a cutout portion 39 that is recessed downward in an arc shape. The front wall portion 35 and the rear wall portion 37 each have four cutout portions 39, which correspond to the number of stored tanks 7. A single tank 7 is stored in each cutout portion 39 so that the neck 7a is fitted in the recessed portion. By fitting the neck 7a into the recessed portion of the cutout portion 39, the tank 7 is stored in the tank casing 32 so that the tank 7 does not shake from side to side.

A front beam member 40 and a rear beam member 41 are provided on the upper portion of the tank casing 32. The front beam member 40 and the rear beam member 41 are each a member having a long bar shape and extends in the vehicle body width direction. The front beam member 40 couples an upper end of a front portion of the left wall portion 36 and an upper end of a front portion of the right wall portion 38 in the vehicle body width direction. The front beam member 40 is located above front portions of the tanks 7 stored in the tank casing 32 and holds the front portions of the tanks 7 together with the front wall portion 35 so that the tanks 7 do not shake up and down.

The rear beam member 41 couples an upper end of a rear portion of the left wall portion 36 and an upper end of a rear portion of the right wall portion 38 in the vehicle body width direction. The rear beam member 41 is located above rear portions of the tanks 7 stored in the tank casing 32 and holds the rear portions of the tanks 7 together with the rear wall portion 37 so that the tanks 7 do not shake up and down.

Note that although the rear beam member 41 has a dimension almost identical to a width dimension of the tank casing 32 in the vehicle body width direction, the front beam member 40 is longer than the width dimension of the tank casing 32 in the vehicle body width direction, and a left end and a right end of the front beam member 40 protrude outward beyond the tank casing 32 in the width direction. The bracket 42 is provided on an upper portion of a left end and an upper portion of a right end of the front beam member 40 that protrude outward beyond the tank casing 32 in the width direction.

Note that although the tank casing 32 according to the present embodiment has a box shape, a shelf or a rack that can accommodate the tanks 7 may be used as the tank casing 32 according to the present invention. Although an example in which both of the front wall portion 35 and the rear wall portion 37 of the tank casing 32 according to the present embodiment have the cutout portions 39 has been described, either the front wall portion 35 or the rear wall portion 37 (one of the front wall portion 35 and the rear wall portion 37 where the necks 7a of the tanks 7 are provided) may have the cutout portions 39.

The brackets 42 are members that support a lower end of the cabin 3 on the vehicle body 2. Specifically, the brackets 42 support lower ends of the front pillars 14 and 15 and the rear pillars 16 and 17 provided on the left and right of the cabin 3. Each of the brackets 42 includes a bracket body 43 that is fitted with a lower end of a corresponding one of the front pillars 14 and 15 and the rear pillars 16 and 17 and a mount member 44 that elastically supports, on the bracket body 43, the lower end of the corresponding one of the front pillars 14 and 15 and the rear pillars 16 and 17.

The bracket body 43 is formed by bending a metal plate so as to have a substantially U shape when viewed from the front side or the rear. Specifically, the bracket body 43 includes a left protruding piece 45 and a right protruding piece 46 that protrude so as to stand upward and are provided apart from each other in the left-right direction and a coupling piece 47 that couples a lower end of the left protruding piece 45 and a lower end of the right protruding piece 46 in the vehicle body width direction (see FIGS. 6 and 7). Since the left protruding piece 45 and the right protruding piece 46 stand upward, movement of the lower end of the corresponding one of the front pillars 14 and 15 and the rear pillars 16 and 17 in the left-right direction is prevented or reduced, and the cabin 3 can be thus firmly fixed with the brackets 42.

The mount member 44 is a plate-shaped member made of an elastic material such as rubber and is provided on the coupling piece 47 of the bracket body 43. The mount member 44 elastically support the lower end of the corresponding one of the front pillars 14 and 15 and the rear pillars 16 and 17 by making contact with the lower end of the corresponding one of the front pillars 14 and 15 and the rear pillars 16 and 17.

As illustrated in FIG. 6, each of the plurality of tanks 7 is provided with the gas pipe 23, and the gas pipe 23 guides the hydrogen gas in the tank 7 to the valve unit 33. As the gas pipe 23, a hose made of a composite material combining materials such as a synthetic resin that can prevent transmission of hydrogen gas and a metal wire having flexibility, or the like is used.

The valve unit 33 collects the hydrogen gas sent from the tanks 7 through the gas pipes 23 and mixes the hydrogen gas as appropriate. The valve unit 33 includes a solenoid valve or the like that can adjust a pressure and a flow rate of the hydrogen gas, and sends the hydrogen gas to the fuel-cell stack 8 after adjusting the hydrogen gas to a pressure and a flow rate suitable for electric power generation in the fuel-cell stack 8.

The valve unit 33 is preferably provided at a position beside the plurality of tanks 7 and lower than the cabin 3. In a case where the valve unit 33 is provided beside the plurality of tanks 7, the tanks 7 and the valve unit 33 are almost equal in height, and the valve unit 33 can be provided close to the tanks 7 because of such a small difference in height in the up-down direction from the tanks 7. As a result, lengths of the gas pipes 23 can be made short.

Furthermore, in a case where the position of the valve unit 33 is set below the cabin 3, the gas pipes 23 can be provided by using a space formed between the cabin 3 and the vehicle body 2, and therefore the gas pipes 23 can be provided without physical interference with another member. Therefore, a degree of freedom of design of device layout is high. Note that the valve unit 33 may be provided in the tank unit 31 (the tank casing 32).

As illustrated in FIGS. 1 to 3, in the present embodiment, the tanks 7 (the tank unit 31) are provided below the cabin 3. The tanks 7 (the tank unit 31) are a heavy unit that is relatively heavy in weight among the members that define the drive device 5 of the working vehicle 1. Accordingly, by providing such a heavy unit below the cabin 3, that is, in the lower portion of the working vehicle 1, the center of gravity of the whole working vehicle 1 can be lowered, i.e., the tanks 7 (the tank unit 31) are preferably provided in the lower portion of the working vehicle 1.

Furthermore, as illustrated in FIG. 3, the tanks 7 (the tank unit 31) are provided on the upper portion of the transmission case 29. In other words, a space above the transmission case 29, specifically, a space between the transmission case 29 and the cabin 3 in the up-down direction serves as a storage 48 in which the tank unit 31 is stored.

That is, in the working vehicle 1 according to the present invention, the tank unit 31 is provided on the upper portion of the transmission case 29, and the cabin 3 is provided on the upper portion of the tank unit 31. The transmission case 29 is relatively heavy in weight, as with the tank unit 31. That is, by gathering the heavy unit (the tank unit 31) and the transmission case 29, which are relatively heavy in weight, below the cabin 3, the center of gravity of the working vehicle 1 can be effectively lowered.

As indicated by the line with alternate long and short dashes in FIGS. 2 and 3, the storage 48 is a space having a rectangular parallelepiped shape that is long in the front-rear direction. The storage 48 is located in a central portion in the vehicle body width direction.

The left rear tire 19L is located beside the storage 48 on one side (on the left) in the vehicle body width direction, and the right rear tire 19R is located beside the storage 48 on the other side (on the right). In this way, at least portions of both side portions of the tank unit 31 are shielded (blocked) from an outside in the vehicle body width direction by the rear tires 19L and 19R. That is, the rear tires 19L and 19R define wall portions that protect the tank unit 31. This makes it possible to avoid damage caused on the side portions of the tank unit 31 by contact with the outside.

A dimension L1 of the storage 48 in the vehicle body width direction is equal to or less than a distance L2 from the left rear tire 19L to the right rear tire 19R. That is, the tank unit 31 is provided between the left rear tire 19L and the right rear tire 19R in front view. In the present embodiment, a right end of the left front tire 18L is located leftward of a right end of the left rear tire 19L, and a left end of the right front tire 18R is located rightward of a right end of the right rear tire 19R, and therefore the tank unit 31 is provided between the left front tire 18L and the right front tire 18R in front view. Since the tank unit 31 is thus located within a range connecting ground contact surfaces of the front tires 18L and 18R and ground contact surfaces of the rear tires 19L and 19R, weight balance can be improved.

Furthermore, the dimension L1 of the storage 48 in the vehicle body width direction is equal to or less than a dimension L3 of the cabin 3 in the vehicle body width direction. That is, the tank unit 31 is provided between one end portion (left end) and the other end portion (right end) of the cabin 3 in the vehicle body width direction in front view.

A front end of the storage 48 is located in a rear portion of the hood 9 and is located between an axle of the front tires 18L and 18R and an axle of the rear tires 19L and 19R. A rear end of the storage 48 is located rearward of the axle of the rear tires 19L and 19R. That is, a front end of the tank unit 31 is located between the axle of the front tires 18L and 18R and the axle of the rear tires 19L and 19R in side view, and a rear end of the tank unit 31 is located rearward of the axle of the rear tires 19L and 19R. This can more effectively lower the center of gravity of the working vehicle 1 and increase traction of the rear tires 19L and 19R.

Furthermore, an upper end of the storage 48 is located below upper ends of the rear tires 19L and 19R, and the tank unit 31 is provided below the upper ends of the rear tires 19L and 19R.

Next, layout examples of the tank unit 31 in the storage 48 are described below.

The first layout example is illustrated in FIGS. 6 and 7.

**In** the layout example illustrated in FIGS. 6 and 7, a plurality of tanks 7 are arranged along the width direction of the vehicle body 2. In the example illustrated in FIGS. 6 and 7, four tanks 7 are arranged along the width direction of the vehicle body 2. These four (plurality of) tanks 7 are each in the form of a tube (a cylindrical shape in the example illustrated in FIGS. 6 and 7) extending in the front-rear direction of the vehicle body 2. According to such a layout, the plurality of tanks 7 can be arranged in the width direction in a concentrated manner in the storage 48 between the vehicle body 2 and the cabin 3. As a result, a heavy unit including at least the tanks 7 can be provided in a limited space above the transmission case 29 (below the cabin 3). It is therefore possible to prevent or reduce a decrease in weight balance of the working vehicle 1.

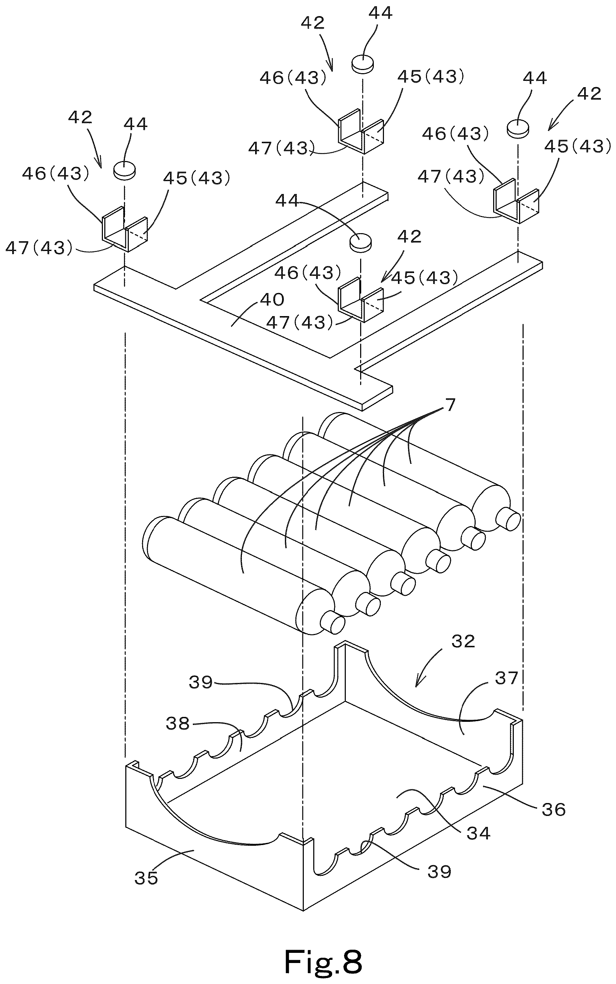

The second layout example is illustrated in FIG. 8.

As illustrated in FIG. 8, a plurality of tanks 7 are arranged along the front-rear direction of the vehicle body 2. In the example illustrated in FIG. 8, six tanks 7 are arranged along the front-rear direction of the vehicle body 2. These six (plurality of) tanks 7 are each in the form of a tube (a cylindrical shape in the example illustrated in FIG. 8) extending in the width direction of the vehicle body 2. According to such a layout, the plurality of tanks 7 can be arranged in the front-rear direction in a concentrated manner in the space between the vehicle body 2 and the cabin 3. As a result, a heavy unit including at least the tanks 7 can be provided in the limited space above the transmission case 29 (below the cabin 3). It is therefore possible to prevent or reduce a decrease in weight balance of the working vehicle 1, as in the case of FIGS. 6 and 7.

As illustrated in FIG. 8, in a case where the plurality of tanks 7 are stored so as to be arranged along the front-rear direction of the vehicle body 2, a (comb-shaped) front beam member 40 whose rear end have portions extending rearward along the left wall portion 36 and the right wall portion 38 of the tank casing 32 may be used instead of front and rear two beam members that are long in the width direction.

The shape, dimensions, number, and material of the tanks 7 (hydrogen cylinders) are not limited to those in the example illustrated in FIG. 8. The shape, dimensions, number, and material of the tanks 7 (hydrogen cylinders) can be changed as appropriate in accordance with sizes, specifications, and the like of the storage 48 and the working vehicle 1, in other words, a space formed between the cabin 3 and the vehicle body 2.

Not only the tanks 7, but also the battery 20 and/or the fuel-cell stack 8 may be included as the heavy unit. As for the heavy units, the tanks 7 are heaviest in weight, and the battery 20 and the fuel-cell stack 8 are the next heaviest in weight after the tanks 7. As the fuel is consumed, a difference between the weights of the battery 20 and the fuel-cell stack 8 and the weight of the tanks 7 decreases, and therefore the battery 20 and/or the fuel-cell stack 8 are preferably provided close to the tanks 7.

For example, examples of the tank unit 31 (the drive device 5) in which the battery 20 and the fuel-cell stack 8 are provided close to the tanks 7 are illustrated in FIGS. 9A to 9C.

In the tank unit 31 (the drive device 5) illustrated in FIG. 9A, the heavy unit including only the tanks 7 is provided in the limited space below the cabin 3. According to such a layout of the heavy unit, the plurality of tanks 7 can be arranged in a horizontal direction in a concentrated manner in the space between the vehicle body 2 and the cabin 3, and therefore a decrease in weight balance of the working vehicle 1 can be prevented or reduced.

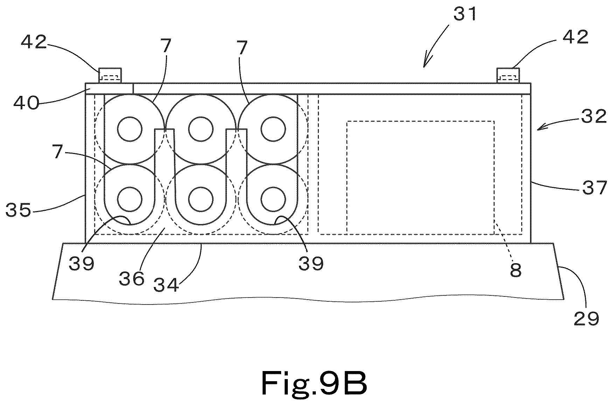

In the tank unit 31 (the drive device 5) illustrated in FIG. 9B, six tanks 7 in total are stored, specifically, three tanks 7 arranged in the front-rear direction are provided in two stages in the up-down direction in the space below the cabin 3. Furthermore, the fuel-cell stack 8 is provided rearward of the tanks 7. That is, not only the tanks 7, but also the fuel-cell stack 8 are included as the heavy unit of the working vehicle 1 illustrated in FIG. 9B.

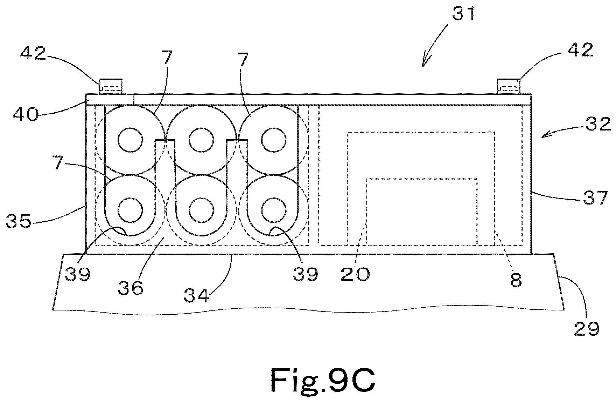

In the tank unit 31 (the drive device 5) illustrated in FIG. 9C, six tanks 7 in total are stored in the space below the cabin 3, as in the case of FIG. 9B. The tank unit 31 illustrated in FIG. 9C is different from FIG. 9B in that the fuel-cell stack 8 and the battery 20 are provided rearward of the tanks 7. That is, not only the tanks 7, but also the fuel-cell stack 8 and the battery 20 are included as the heavy unit of the working vehicle 1 illustrated in FIG. 9C.

The layouts of the heavy unit illustrated in FIGS. 9B and 9C can be used, for example, in a case where the working vehicle 1 itself is large and there is a sufficient space between the vehicle body 2 and the cabin 3. Even according to such layouts of the heavy unit, the plurality of tanks 7 can be arranged in a horizontal direction in a concentrated manner in the space between the vehicle body 2 and the cabin 3, and therefore a decrease in weight balance of the working vehicle 1 can be prevented or reduced.

The working vehicle 1 according to the present invention includes the vehicle body 2 to which the working device 49 is connectable, the cabin 3 in which the operator's seat 10 provided on the vehicle body 2 is housed, the traveling device 4 that supports the vehicle body 2 and allows the vehicle body 2 to travel, the drive device 5 that drives the traveling device 4, and the tank 7 in which gas to drive the drive device 5 is stored, and the tank 7 is provided below the cabin 3. It is highly likely that below the cabin 3, the drive motor 6 and the transmission case 29 are provided and the center of gravity of the working vehicle 1 is present. Therefore, in a case where the tank 7 is provided below the cabin 3, the tank 7, which is heavy in weight, can be provided close to the center of gravity of the working vehicle 1, and a decrease in weight balance of the working vehicle 1 can be prevented or reduced even in a case where the tank 7 is provided inside the vehicle.

The drive device 5 desirably includes the fuel cell (the fuel-cell stack) 8 to generate electric power using the gas in the tank 7, the battery 20 to store electric power generated by the fuel cell 8, and the drive motor 6 to be driven by electric power generated by the fuel cell 8.

The configuration in which the tank 7, which is heavy in weight, is provided below the cabin 3 to prevent or reduce a decrease in weight balance can be suitably used for a fuel cell vehicle including the drive device 5 including the fuel cell 8 to generate electric power using the gas in the tank 7, the battery 20 to store electric power generated by the fuel cell 8, and the drive motor 6 to be driven by electric power generated by the fuel cell 8. Since a hydrogen tank filled with hydrogen, which is heavy in weight, is used in a fuel cell vehicle, the configuration for preventing or reducing a decrease in weight balance is effective for the fuel cell working vehicle 1 (fuel cell vehicle).

In the working vehicle 1 according to the present invention, the battery 20 is provided below the cabin 3 together with the tank 7.

In the working vehicle 1 according to the present invention, the fuel cell 8 is provided below the cabin 3 together with the tank 7.

According to such a working vehicle 1, the battery 20 and the fuel cell 8, which are heavy in weight, can be provided close to the center of gravity of the working vehicle 1 in addition to the tank 7, and therefore a decrease in weight balance of the working vehicle 1 can be prevented or reduced with more certainty.

In the working vehicle 1 according to the present invention, a plurality of the tanks 7 are arranged along the front-rear direction of the vehicle body 2, and each of the plurality of tanks 7 is in the form of a tube extending in the width direction of the vehicle body 2.

In the working vehicle 1 according to the present invention, a plurality of the tanks 7 are arranged along the width direction of the vehicle body 2, and each of the plurality of tanks 7 is in the form of a tube extending in the front-rear direction of the vehicle body 2.

According to such a working vehicle 1, the plurality of tanks 7 can be efficiently provided in a concentrated manner close to the center of gravity of the working vehicle 1, and the weight balance of the working vehicle 1 can be improved.

In the working vehicle 1 according to the present invention, the drive device 5 includes the valve unit 33 to adjust a flow rate of gas supplied from the plurality of tanks 7 to the fuel cell 8, and the valve unit 33 is provided at a position beside the plurality of tanks 7 and lower than the cabin 3.

According to such a working vehicle 1, the tanks 7 and the valve unit 33 are almost equal in height, and the valve unit 33 can be provided close to the tanks 7 because of such a small difference in height in the up-down direction, and therefore the lengths of the gas pipes 23 can be shortened. Furthermore, in a case where the position of the valve unit 33 is set below the cabin 3, the gas pipes 23 can be provided by using a space between the cabin 3 and the vehicle body 2, and therefore the gas pipes 23 can be provided without physical interference with another member. Therefore, a degree of freedom of design of device layout is high.

The working vehicle 1 according to the present invention includes the transmission case 29 that transmits driving force generated by the drive motor 6 to the traveling device 4, and the tank 7 is provided between the cabin 3 and the transmission case 29.

The working vehicle 1 according to the present invention includes the transmission case 29 that transmits driving force generated by the drive motor 6 to the traveling device 4, and the battery 20 is provided between the cabin 3 and the transmission case 29.

The working vehicle 1 according to the present invention includes the transmission case 29 that transmits driving force generated by the drive motor 6 to the traveling device 4, and the fuel cell 8 is provided between the cabin 3 and the transmission case 29.

According to such a working vehicle 1, a member such as the tank 7, the battery 20, or the fuel cell 8 is provided on the upper portion of the transmission case 29, which is heaviest among the members of the drive device 5, and therefore the working vehicle 1 can have good weight balance.

Example embodiments of the present invention provide working vehicles 1 described in the following items.

(Item 1) A working vehicle 1 including a vehicle body 2 to which a working device 49 is connectable, a cabin 3 to house an operator's seat 10 provided on the vehicle body 2, a traveling device 4 to support the vehicle body 2 and allow the vehicle body 2 to travel, a drive device 5 to drive the traveling device 4, and a tank 7 to store gas to drive the drive device 5, wherein the tank 7 is provided below the cabin 3.

With the working vehicle 1 according to item 1, the drive motor 6 and the transmission case 29 are provided below the cabin 3, and it is highly likely that the center of gravity of the working vehicle 1 is located below the cabin 3. Therefore, in a case where the tank 7 is provided below the cabin 3, the tank 7, which is heavy in weight, can be provided close to the center of gravity of the working vehicle 1, and a decrease in weight balance of the working vehicle 1 can be prevented or reduced even in a case where the tank 7 is provided inside the vehicle.

(Item 2) The working vehicle 1 according to item 1, wherein the drive device 5 includes a fuel cell 8 to generate electric power using the gas in the tank 7, a battery 20 to store electric power generated by the fuel cell 8, and a drive motor 6 to be driven by electric power generated by the fuel cell 8.

With the working vehicle 1 according to item 2, the configuration in which the tank 7, which is heavy in weight, is provided below the cabin 3 to prevent or reduce a decrease in weight balance can be suitably used for a fuel cell vehicle including the drive device 5 including the fuel cell 8 to generate electric power using the gas in the tank 7, the battery 20 to store electric power generated by the fuel cell 8, and the drive motor 6 to be driven by electric power generated by the fuel cell 8. That is, the working vehicle 1 according to item 2 can prevent or reduce a decrease in weight balance and therefore can be effectively used for a fuel cell working vehicle 1 (fuel cell vehicle) in which a hydrogen tank filled with hydrogen, which is heavy in weight, is used.

(Item 3) The working vehicle 1 according to item 2, wherein the battery 20 is provided below the cabin 3 together with the tank 7.

With the working vehicle 1 according to item 3, the battery 20, which is heavy in weight, can be provided close to the center of gravity of the working vehicle 1 in addition to the tank 7, and a decrease in weight balance of the working vehicle 1 can be prevented or reduced with more certainty.

(Item 4) The working vehicle 1 according to item 1 or 2, wherein the fuel cell 8 is provided below the cabin 3 together with the tank 7.

With the working vehicle 1 according to item 4, the fuel cell 8, which is heavy in weight, can be provided close to the center of gravity of the working vehicle 1 in addition to the tank 7, and a decrease in weight balance of the working vehicle 1 can be prevented or reduced with more certainty.

(Item 5) The working vehicle 1 according to any one of items 2 to 4, wherein a plurality of the tanks 7 are arranged along a front-rear direction of the vehicle body 2, and the plurality of tanks 7 are each in the form of a tube extending in a width direction of the vehicle body 2.

With the working vehicle 1 according to item 5, the plurality of tanks 7 can be efficiently provided close to the center of gravity of the working vehicle 1 in a concentrated manner, and therefore the weight balance of the working vehicle 1 can be improved.

(Item 6) The working vehicle 1 according to any one of items 2 to 4, wherein a plurality of the tanks 7 are arranged along a width direction of the vehicle body 2, and the plurality of tanks 7 are each in the form of a tube extending in a front-rear direction of the vehicle body 2.

With the working vehicle 1 according to item 6, the plurality of tanks 7 can be efficiently provided close to the center of gravity of the working vehicle 1 in a concentrated manner, and therefore the weight balance of the working vehicle 1 can be improved.

(Item 7) The working vehicle 1 according to item 5 or 6, wherein the drive device 5 includes a valve unit 33 to adjust a flow rate of the gas supplied from the plurality of tanks 7 to the fuel cell 8, and the valve unit 33 is provided at a position beside the plurality of tanks 7 and lower than the cabin 3.

With the working vehicle 1 according to item 7, the tank 7 and the valve unit 33 are almost equal in height, and the valve unit 33 can be provided close to the tank 7 because of such a small difference in height in the up-down direction, and therefore the lengths of the gas pipes 23 can be shortened. Furthermore, in a case where the position of the valve unit 33 is lower than the cabin 3, the gas pipes 23 can be provided by using a space between the cabin 3 and the vehicle body 2, and therefore the gas pipes 23 can be provided without physical interference with another member. Therefore, a degree of freedom of design of device layout is high.

(Item 8) The working vehicle 1 according to any one of items 2 to 4, further including a transmission case 29 to transmit a driving force generated by the drive motor 6 to the traveling device 4, wherein the tank 7 is provided between the cabin 3 and the transmission case 29.

With the working vehicle 1 according to item 8, the tank 7 is provided on the upper portion of the transmission case 29, which is heaviest in weight among members of the drive device 5, and therefore the working vehicle 1 can have good weight balance.

(Item 9) The working vehicle 1 according to any one of items 2 to 4, further including a transmission case 29 to transmit a driving force generated by the drive motor 6 to the traveling device 4, wherein the battery 20 is provided between the cabin 3 and the transmission case 29.

With the working vehicle 1 according to item 9, the battery 20 is provided on the upper portion of the transmission case 29, which is heaviest in weight among members of the drive device 5, and therefore the working vehicle 1 can have good weight balance.

(Item 10) The working vehicle 1 according to any one of items 2 to 4, further including a transmission case 29 to transmit a driving force generated by the drive motor 6 to the traveling device 4, wherein the fuel cell 8 is provided between the cabin 3 and the transmission case 29.

With the working vehicle 1 according to item 10, the fuel cell 8 is provided on the upper portion of the transmission case 29, which is heaviest in weight among members of the drive device 5, and therefore the working vehicle 1 can have good weight balance.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: working vehicle
- 2: vehicle body
- 3: cabin
- 4: traveling device
- 5: drive device
- 6: drive motor
- 6a: output shaft of drive motor
- 7: tank
- 8: fuel-cell stack (fuel cell)
- 10: operator's seat
- 20: battery
- 29: transmission case
- 33: valve unit
- 48: storage
- 49: working device

## Claims

1. A working vehicle comprising:
a vehicle body to which a working device is connectable;
a cabin to house an operator's seat provided on the vehicle body;
a traveling device to support the vehicle body and allow the vehicle body to travel;
a drive device to drive the traveling device; and
a tank to store gas to drive the drive device; wherein
the tank is provided below the cabin.

2. The working vehicle according to claim 1, wherein
the drive device includes a fuel cell to generate electric power using the gas in the tank, a battery to store electric power generated by the fuel cell, and a drive motor to be driven by electric power generated by the fuel cell.

3. The working vehicle according to claim 2, wherein
the battery is provided below the cabin together with the tank.

4. The working vehicle according to claim 2, wherein
the fuel cell is provided below the cabin together with the tank.

5. The working vehicle according to claim 2, wherein
a plurality of the tanks are arranged along a front-rear direction of the vehicle body; and
the plurality of tanks are each in the form of a tube extending in a width direction of the vehicle body.

6. The working vehicle according to claim 2, wherein
a plurality of the tanks are arranged along a width direction of the vehicle body; and
the plurality of tanks are each in the form of a tube extending in a front-rear direction of the vehicle body.

7. The working vehicle according to claim 5 or 6, wherein
the drive device includes a valve unit to adjust a flow rate of the gas supplied from the plurality of tanks to the fuel cell and
the valve unit is provided at a position beside the plurality of tanks and lower than the cabin.

8. The working vehicle according to claim 2, further comprising a transmission case to transmit a driving force generated by the drive motor to the traveling device; wherein
the tank is provided between the cabin and the transmission case.

9. The working vehicle according to claim 2, further comprising a transmission case to transmit a driving force generated by the drive motor to the traveling device; wherein
the battery is provided between the cabin and the transmission case.

10. The working vehicle according to claim 2, further comprising a transmission case to transmit a driving force generated by the drive motor to the traveling device; wherein
the fuel cell is provided between the cabin and the transmission case.
